Europäisches Patentamt

(19) European Patent Office

Office européen des brevets

(11) Publication number : **0 537 990 A1**

## (12) EUROPEAN PATENT APPLICATION

(21) Application number : **92309336.3**

(22) Date of filing : **14.10.92**

(51) Int. Cl.⁵ : **G11B 21/08**

(30) Priority : **16.10.91 JP 294875/91**

(43) Date of publication of application :
**21.04.93 Bulletin 93/16**

(84) Designated Contracting States :
**DE FR GB**

(71) Applicant : **International Business Machines
Corporation
Old Orchard Road
Armonk, N.Y. 10504 (US)**

(72) Inventor : **Kisaka, Masashi
5-11-17, Yokodai, Isogo-ku
Yokohama-shi, Kanagawa-ken (JP)**

(74) Representative : **Atchley, Martin John
Waldegrave
IBM United Kingdom Limited Intellectual
Property Department Hursley Park
Winchester Hampshire SO21 2JN (GB)**

(54) **Actuator device with means for positioning a movable actuator relative to a fixed member.**

(57) The present invention relates to an actuator device (14) comprising a fixed number, an actuator (12) cooperating with the fixed member, means for moving the actuator relative to the fixed member and for positioning the actuator in a required position relative to the fixed number, a control system (22, 28, 30) for the actuator moving means for controlling the movement of said actuator in a selected one of a plurality of control modes and for switching between control modes, means for supplying an input signal to the control system representing the difference between the actual position of the actuator relative to the fixed member and the required position of the actuator, and means (14, 16, 18, 20) in the control system for generating a control signal in response to the receipt of the input signal and for supplying the control signal to the actuator moving means.

According to the invention the actuator device is characterised in that the input signal and the control signal are state variables and the control system comprises means for varying the gain of the control system only when switching between control modes.

FIG. 1

The present invention relates to an actuator device which includes a fixed member and a movable actuator cooperating with the fixed member. In the operation of the device, the movable actuator has to be positioned accurately relative to the fixed member and the invention relates to means for positioning the actuator accurately relative to the fixed member.

The invention has a particular application in positioning the read/write head of a data storage device such as one utilising a disc with a magnetic or optical recording medium.

In positioning the read/write head of a disc data recording and storage device on a target data track by a seek operation, control inputs to a voice coil motor (VCM) for driving the head are provided in a velocity control mode, a settling mode, and a track following mode. The settling mode together with the track following mode is often called the position control mode. Because in each of these modes the head movement is controlled differently, an overshoot may occur resulting in a longer time for positioning the head on the target track unless the initialisation is adequate when switching from the velocity control mode to the settling mode or when the settling mode is switched to the track following mode. In conventional head positioning systems, there is generally nothing special to be done when switching from the velocity control mode to the settling mode, and a value which is stored when the head rests on the target track is used as an initial output value of an integrator when switching from the settling mode to the track following mode. However, such a method does not guarantee fast positioning.

Japanese Published Unexamined Patent Application (PUPA) No.2-244467 discloses a control method for positioning the read/write head in a magnetic disc data storage device which performs in a seek control mode for moving the head to the target data track and in a following control mode for positioning the head at the centre of the target track. In the arrangement described a part of the calculation of a digital filter used in the following control mode is processed in parallel with the seek control made during a predetermined period immediately before the mode switching instant. According to the arrangement described, the most suitable initial value of a state variable is provided when switching from the seek control mode to the following control mode, so that an overshoot of the head is prevented. However, this control method needs parallel calculations and is relatively complex.

Japanese PUPA No.2-304782 discloses a control method for positioning the head in a magnetic disk data storage device which uses a velocity control mode for moving the head to a target data track and a position control mode for positioning the head on the target track. In the arrangement described an initial manipulated variable and cut-off frequency in the position control mode are adjusted depending on an initial position and initial velocity at the instant of switching from the velocity control mode to the position control mode so that an overshoot is prevented. However, it is undesirable in terms of accuracy to make use of velocity. In addition, even the cut-off frequency must be adjusted in this arrangement, which thereby becomes relatively complicated.

As described above, the conventional methods for preventing an overshoot of the head need extra calculations and operations.

The object of the present invention is to provide an actuator device having an improved control system for positioning a movable actuator in the device relative to a fixed member.

The present invention relates to an actuator devise comprising a fixed member, an actuator cooperating with the fixed member, means for moving the actuator relative to the fixed member and for positioning the actuator in a required position relative to the fixed member, a control system for the actuator moving means for controlling the movement of said actuator in a selected one of a plurality of control modes and for switching between control modes, means for supplying an input signal to the control system representing the difference between the actual position of the actuator relative to the fixed member and the required position of the actuator, and means in the control system for generating a control signal in response to the receipt of the input signal and for supplying the control signal to the actuator moving means.

According to the invention the actuator device is characterised in that the input signal and the control signal are state variables and the control system comprises means for varying the gain of the control system only when switching between control modes.

According to one embodiment of the invention a recording and storage device includes a read/write head, a recording medium (for example, a magnetic disc) including a plurality of tracks to be accessed by the head, and a motor for moving the head. A method and an apparatus for positioning the head to a target track include switching control modes and means for outputting a control signal value to drive the motor in response to an input signal value representing a difference between the current position of the head and the target track. The gain of the control system in which the input and control signal values are state variables, is changed only at the instant of switching between the control modes to converge quickly onto the target track. More particularly, the gain is changed by adding to the control signal value an initial value which nullifies a term of an eigenvalue having a maximum absolute value in the state equation of the control system, only at the mode switching time.

The addition of the initial value is done only when the switching from the velocity control mode to the position control mode, that is, only at the start time of the position control mode. The position control mode includes a settling mode not using an integrator and a track following mode using an integrator, and a similar initial value is generated and used as an initial output value of the integrator also when switching from the settling mode to the track following mode.

In order that the invention may be more readily understood an embodiment will now be described with reference to the accompanying drawings in which:

FIG. 1 is a block diagram showing an example of a magnetic disc data recording and storage apparatus to which the present invention is applicable,

FIG. 2 is a block diagram showing the configuration of a position control section in the apparatus of Figure 1 at the time instant of switching from a velocity control mode to a settling mode,

FIG. 3 is a block diagram showing the configuration of the above position control section in the settling mode after switching,

FIG. 4 is a graph showing the state of convergence according to the apparatus being described compared with prior art arrangements in the settling mode,

FIG. 5 is a block diagram showing the configuration of the above position control section at the time instant of switching from the settling mode to a track following mode,

FIG. 6 is a block diagram showing the configuration of the above position control section in the track following mode after switching, and

FIG. 7 is a graph showing the state of convergence according to the arrangement being described compared with prior art arrangement in the track following mode.

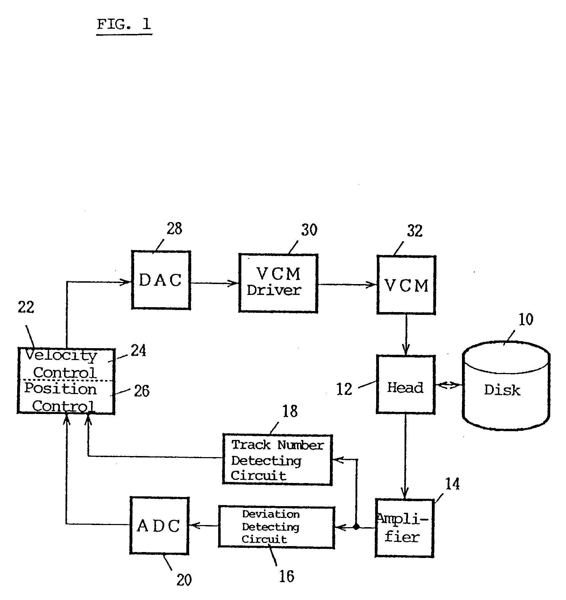

FIG. 1 shows an embodiment of a magnetic disc data recording and storage device in which a read/write head is positioned according to an embodiment of the present invention. The embodiment is to be described in connection with a magnetic disk storage device in which a head is positioned by a sector servo scheme, but the embodiment could be applied to other positioning schemes. A disk 10 includes a plurality of tracks and is divided into a plurality of sectors and servo information is written at each boundary between adjacent sectors. The position of a head 12 is represented by the number of the track on which the head 12 is currently positioned and the amount of deviation from the centre of the track. The sector servo scheme performs velocity control and position control by reading servo information in succession by the head 12 to detect the head position.

The servo information read by the head 12 is amplified by an amplifier 14 and then sent to a deviation detecting circuit 16 and a track number detecting circuit 18. The deviation detecting circuit 16 demodulates a burst pattern contained in the servo information, generates a deviation signal indicating how the head 12 is shifted from the centre of the track and sends the signal to an analog-to-digital converter (ADC) 20. The ADC 20 samples the deviation signal at a predetermined sampling frequency and supplies the signal to a digital positioning apparatus 22. Assuming that the rotational speed of the disk 10 is 3600rpm and the number of sectors per track is 30, then the sampling frequency will be 1800Hz. In this case, the output from the ADC 20 is a sample value of the deviation signal taken about every 555µs. The track number detecting circuit 18 pulses the output from the amplifier 14, detects the track number written in a grey code in a servo area, and then supplies the track number to the positioning apparatus 22 in the form of binary data. The positioning apparatus 22 takes in the track number at the sampling interval described above.

The positioning apparatus 22 comprises a velocity control section 24 and a position control section 26 and monitors the difference (hereinafter referred to as the positional error) between the head position and the target track. This is represented by a deviation signal value from the ADC 20 and a track number from the track number detecting circuit 18. When the difference is larger than a predetermined number of tracks (for example, 16 tracks) during a seek operation, the positioning apparatus 22 is in the velocity control mode and the velocity control section 24 controls the movement of the head 12 according to a previously established velocity curve, as is well known in the art. When the positional error reaches 16 tracks, the control of the movement of the head is switched from the velocity control section 24 to the position control section 26. As described below in detail, the position control section 26 operates in the settling mode or the track following mode, and the velocity control mode changes to the settling mode. When the positional error reaches, for example, one track, the settling mode changes to the track following mode to do final head positioning.

A digital control output signal from the positioning apparatus 22 is converted to an analog signal by a digital-to-analog converter (DAC) 28 and then is supplied to a VCM driver 30. The VCM driver 30 responds to the analog control signal from the DAC 28 and supplies current proportional to the signal to a VCM 32, which moves the head 12.

The following is a detailed description of the settling mode and track following mode of the position control section 26. As described above, when the positional error reaches 16 tracks, the velocity control mode is switched to the settling mode. It is noted that this difference of 16 tracks may vary depending of the design and the embodiment being described is not limited to this value. In the settling mode, an appropriate feedback value is determined from a transfer function of the VCM 32 according to a state space equation in which a positional error y(n) at time n and a control output value u(n) at the same time n are state variables. Assuming that there is no offset, the pulse transfer function of the VCM 32 is:

Equation 1

$$Y(z) \ = \ U(z) \, \frac{az^{-1} \ + \ bz^{-2} \ + \ cz^{-3}}{(1 \ - \ z^{-1})^2}$$

In Equation 1, Y(z) and U(z) represent Z-transformations of y(n) and u(n), respectively. The constants a, b, and c are determined by characteristics of the motor, the sampling time, the delay time, and the electric circuits, and for a typical 2.5" disk, the constants are as follows:

$a = 0.54$

$b = 1.8$

$c = 0.145$

Equation 1 can be represented using a difference equation as follows:

$$y(n + 1) \ = \ 2y(n) - y(n - 1) + b \cdot u(n - 1) + c \cdot u(n - 2) + a \cdot u(n)$$

If there is an offset o(n), d o(n) is added to the right side. From this equation the following state space equation is obtained.

Equation 2

$$\begin{bmatrix} y(n+1) \\ y(n) \\ u(n) \\ u(n-1) \end{bmatrix} = \begin{bmatrix} 2 & -1 & b & c \\ 1 & 0 & 0 & 0 \\ 0 & 0 & 0 & 0 \\ 0 & 0 & 1 & 0 \end{bmatrix} \begin{bmatrix} y(n) \\ y(n-1) \\ u(n-1) \\ u(n-2) \end{bmatrix} + \begin{bmatrix} a \\ 0 \\ 1 \\ 0 \end{bmatrix} u(n)$$

Now, when u(n) is calculated, considering feedback, using the following equation:

Equation 3

$$u(n) = [\ K1 \ K2 \ K3 \ K4 \ ] \begin{bmatrix} y(n) \\ y(n-1) \\ u(n-1) \\ u(n-2) \end{bmatrix}$$

then Equation 2 becomes as follows:

Equation 4

$$\begin{bmatrix} y(n+1) \\ y(n) \\ u(n) \\ u(n-1) \end{bmatrix} = \begin{bmatrix} 2 & -1 & b & c \\ 1 & 0 & 0 & 0 \\ 0 & 0 & 0 & 0 \\ 0 & 0 & 1 & 0 \end{bmatrix} \begin{bmatrix} y(n) \\ y(n-1) \\ u(n-1) \\ u(n-2) \end{bmatrix} +$$

$$\begin{bmatrix} a \\ 0 \\ 1 \\ 0 \end{bmatrix} \begin{bmatrix} K1 & K2 & K3 & K4 \end{bmatrix} \begin{bmatrix} y(n) \\ y(n-1) \\ u(n-1) \\ u(n-2) \end{bmatrix}$$

$$= \begin{bmatrix} 2+aK1 & -1+aK2 & b+aK3 & c+aK4 \\ 1 & 0 & 0 & 0 \\ K1 & K2 & K3 & K4 \\ 0 & 0 & 1 & 0 \end{bmatrix} \begin{bmatrix} y(n) \\ y(n-1) \\ u(n-1) \\ u(n-2) \end{bmatrix}$$

or

$$P(n + 1) = Q \cdot P(n)$$

Supposing that eigenvalues of the matrix Q are $\alpha1$, $\alpha2, \alpha3$, and $\alpha4$ (for convenience, it is assumed that there is no multiple root), eigenvectors V i with respect to $\alpha i$ (i=1, 2, 3, 4) are:

Equation 5

$$V\alpha i = \begin{bmatrix} \alpha i \\ 1 \\ \alpha i/K\alpha i \\ 1/K\alpha i \end{bmatrix}$$

Equation 6

$$K\alpha i = \frac{a\alpha i^2 + b\alpha i + c}{\alpha i^2 - 2\alpha i + 1}$$

It is possible to calculate feedback coefficients K1, K2, K3, and K4 from Equation 4 according to a well-known design method such as the pole assignment method. Though such feedback is done during the settling mode, as described above, an overshoot would occur, resulting in a longer positioning time, if the position control is performed according to the above equations immediately after the velocity control mode is switched to the settling mode. The embodiment being described therefore adds a specific value r0 to a control output value u(m) at the start time t=m of the settling mode. This means that u(n) in Equations 2 and 3 is replaced by u(m)+r0. Thereby Equation 4 can be written as follows:

Equation 7

$$\begin{bmatrix} y(m+1) \\ y(m) \\ u(m) \\ u(m-1) \end{bmatrix} = \begin{bmatrix} 2+aK1 & -1+aK2 & b+aK3 & c+aK4 \\ 1 & 0 & 0 & 0 \\ K1 & K2 & K3 & K4 \\ 0 & 0 & 1 & 0 \end{bmatrix} \begin{bmatrix} y(m) \\ y(m-1) \\ u(m-1) \\ u(m-2) \end{bmatrix} + \begin{bmatrix} a \\ 0 \\ 1 \\ 0 \end{bmatrix} r0$$

and from time m+1 on as:

Equation 8

$$
\begin{bmatrix} y(n+1) \\ y(n) \\ u(n) \\ u(n-1) \end{bmatrix} =
\begin{bmatrix} 2+aK1 & -1+aK2 & b+aK3 & c+aK4 \\ 1 & 0 & 0 & 0 \\ K1 & K2 & K3 & K4 \\ 0 & 0 & 1 & 0 \end{bmatrix}
\begin{bmatrix} y(n) \\ y(n-1) \\ u(n-1) \\ u(n-2) \end{bmatrix}
$$

$$
= \begin{bmatrix} 2+aK1 & -1+aK2 & b+aK3 & c+aK4 \\ 1 & 0 & 0 & 0 \\ K1 & K2 & K3 & K4 \\ 0 & 0 & 1 & 0 \end{bmatrix}^2
\begin{bmatrix} y(n-1) \\ y(n-2) \\ u(n-2) \\ u(n-3) \end{bmatrix} = \cdots\cdots
$$

$$
= \begin{bmatrix} 2+aK1 & -1+aK2 & b+aK3 & c+aK4 \\ 1 & 0 & 0 & 0 \\ K1 & K2 & K3 & K4 \\ 0 & 0 & 1 & 0 \end{bmatrix}^{n-m}
\begin{bmatrix} y(m+1) \\ y(m1) \\ u(m1) \\ u(m-1) \end{bmatrix}
$$

$$
= \begin{bmatrix} 2+aK1 & -1+aK2 & b+aK3 & c+aK4 \\ 1 & 0 & 0 & 0 \\ K1 & K2 & K3 & K4 \\ 0 & 0 & 1 & 0 \end{bmatrix}^{n-m}
(AV\alpha 1 + BV\alpha 2 + CV\alpha 3 + DV\alpha 4)
$$

$$
= A\alpha 1^{n-m} V\alpha 1 + B\alpha 2^{n-m} V\alpha 2 + C\alpha 3^{n-m} V\alpha 3 + D\alpha 4^{n-m} V\alpha 4
$$

where,

Equation 9

$$
\begin{bmatrix} y(m+1) \\ y(m) \\ u(m) \\ u(m-1) \end{bmatrix} = AV\alpha 1 + BV\alpha 2 + CV\alpha 3 + DV\alpha 4
$$

Now, if the absolute value of 4 is larger than the absolute values of other eigenvalues, only a term of coefficient D remains to the last in Equation 8 as n becomes larger. From equations 7 and 8 the following equation can be obtained.

Equation 10

$$
\begin{bmatrix} A \\ B \\ C \\ D \end{bmatrix} = \begin{bmatrix} V\alpha 1 & V\alpha 2 & V\alpha 3 & V\alpha 4 \end{bmatrix}
\left( \begin{bmatrix} 2+aK1 & -1+aK2 & b+aK3 & c+aK4 \\ 1 & 0 & 0 & 0 \\ K1 & K2 & K3 & K4 \\ 0 & 0 & 1 & 0 \end{bmatrix}
\begin{bmatrix} y(m) \\ y(m-1) \\ u(m-1) \\ u(m-2) \end{bmatrix} +
\begin{bmatrix} a \\ 0 \\ 1 \\ 0 \end{bmatrix} r0 \right)
$$

Since the only unknown on the right side of this equation is r0, r0 can be solved by making D=0. r0 is then written as follows:

$$r0 = L1y(m) + L2y(m-1) + L3u(m-1) + L4u(m-2)$$

As is obvious from the above, r0 has a dynamic value which depends upon only inputs and outputs of the system. If r0 is added to a previously designed feedback value at time m, Equation 8 becomes

Equation 11

$$\begin{bmatrix} y(n+1) \\ y(n) \\ u(n) \\ u(n-1) \end{bmatrix} = A\alpha_1^{n-m} \ V_{\alpha 1} + B\alpha_2^{n-m} \ V_{\alpha 2} + C\alpha_3^{n-m} \ V_{\alpha 3}$$

which is represented by fast converging eigenvalues, allowing the fast positioning.

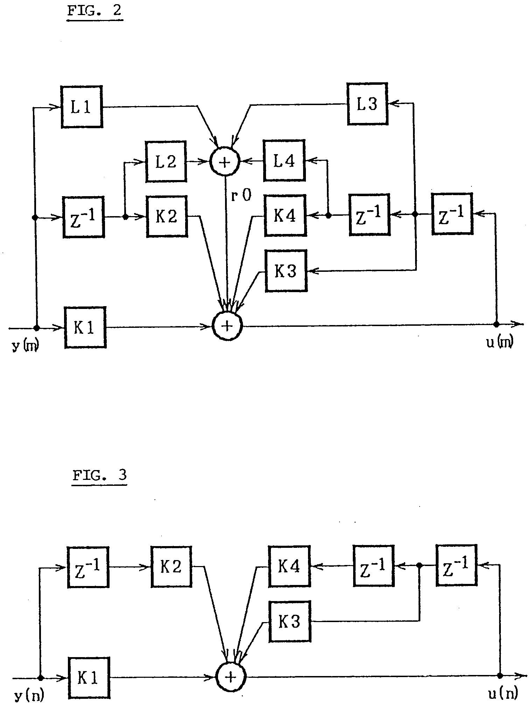

FIG. 2 shows the configuration of the position control section 26 at time m when the velocity control mode changes to the settling mode, and FIG.3 shows the configuration thereafter until the system switches to the track following mode. Each configuration comprises multiplication elements (Ki, Li), addition element(s) (+), and one sample delay element ($Z^{-1}$). In FIG.2, it is seen that a feedforward value r0 which is added to the output at time m is generated according to the above equation of r0. That is, r0 is generated by multiplying the input signal value y(m) at the mode switching time, input signal value y(m-1) and control signal value u(m-1) at one sample before the switching time, and control signal value u(m-2) at two samples before the switching time with the given coefficients L1, L2, L3, and L4, respectively, and by adding their products. The configurations of FIG.2 and FIG.3 are of a digital filter in which adding r0 at time m means changing the gain of the filter only at that moment. This change of gain is achieved by setting r0 so that the term of the eigenvalue 4 whose absolute value is a maximum (the term of the coefficient D) in the state equation of Equation 8 becomes zero.

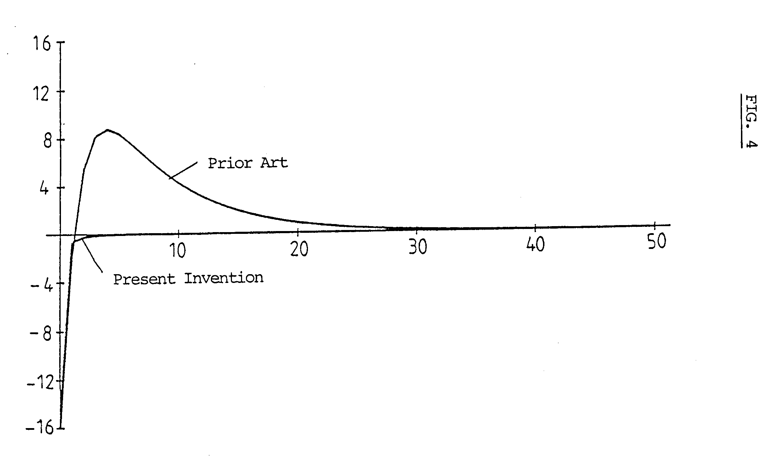

FIG. 4 shows, in comparison with prior art, the state of convergence in which a feedforward value is added at a mode switching time according to the embodiment being described. As shown in the figure, the embodiment being described makes it possible to converge considerably faster than in the prior art arrangement. FIG. 4 shows an example in which eigenvalues i and coefficients Ki and Li are chosen as follows:

| $\alpha_1 = 0.0$ | $\alpha_2 = 0.1$ | $\alpha_3 = 0.5$ | $\alpha_4 = 0.85$ |
|---|---|---|---|
| K1 = -0.26 | K2 = 0.23 | K3 = -0.41 | K4 = -0.034 |
| L1 = -0.46 | L2 = 0.30 | L3 = -0.61 | L4 = -0.044 |

In the settling mode, when the input positional error y(n) reaches a second value (for example, one track), the mode is switched to the track following mode. In the track following mode, fine control is performed using an integrator. With z(n) being a value of the integrator at time n, an equation of the integrator can be written as follows:

$$z(n+1) = z(n) + y(n)$$

Since an offset is of significance in the track following mode, let the offset be o(n). Adding the integrator and offset to Equation 2 makes.

Equation 12

$$\begin{bmatrix} y(n+1) \\ y(n) \\ u(n) \\ u(n-1) \\ z(n+1) \\ o(n+1) \end{bmatrix} = \begin{bmatrix} 2 & -1 & b & c & 0 & d \\ 1 & 0 & 0 & 0 & 0 & 0 \\ 0 & 0 & 0 & 0 & 0 & 0 \\ 0 & 0 & 1 & 0 & 0 & 0 \\ 1 & 0 & 0 & 0 & 1 & 0 \\ 0 & 0 & 0 & 0 & 0 & 1 \end{bmatrix} \begin{bmatrix} y(n) \\ y(n-1) \\ u(n-1) \\ u(n-2) \\ z(n) \\ o(n) \end{bmatrix} + \begin{bmatrix} a \\ 0 \\ 1 \\ 0 \\ 0 \\ 0 \end{bmatrix} u(n)$$

from which the following equation similar to Equation 4 can be obtained.

Equation 13

$$
\begin{bmatrix}
y(n+1) \\
y(n) \\
u(n) \\
u(n-1) \\
z(n+1) \\
o(n+1)
\end{bmatrix}
=
\begin{bmatrix}
2+aK1 & -1+aK2 & b+aK3 & c+aK4 & aK5 & d \\
1 & 0 & 0 & 0 & 0 & 0 \\
K1 & K2 & K3 & K4 & K5 & 0 \\
0 & 0 & 1 & 0 & 0 & 0 \\
1 & 0 & 0 & 0 & 1 & 0 \\
0 & 0 & 0 & 0 & 0 & 1
\end{bmatrix}
\begin{bmatrix}
y(n) \\
y(n-1) \\
u(n-1) \\
u(n-2) \\
z(n) \\
o(n)
\end{bmatrix}
$$

Eigenvalues of Equation 13 are $\alpha i (i = 1...5)$ which can be arbitrarily chosen, and $1( = \alpha 6)$. The corresponding eigenvectors are expressed as follows:

Equation 14

$$
V\alpha i =
\begin{bmatrix}
\alpha i \\
1 \\
i/K\alpha i \\
1/K\alpha i \\
\alpha i/(\alpha i-1) \\
0
\end{bmatrix}
$$

Equation 15

$$
K i = \frac{a\alpha i^2 + b\alpha i + c}{\alpha i^2 - 2\alpha i + 1}
$$

and

Equation 16

$$
V1 =
\begin{bmatrix}
0 \\
0 \\
-1 \\
-1 \\
-(1-K3-K4)/K5 \\
1
\end{bmatrix}
$$

If the settling mode is changed to the track following mode at time t=p, the following is obtained from Equation 13.

Equation 17

$$
\begin{bmatrix} y(n+1) \\ y(n) \\ u(n) \\ u(n-1) \\ z(n+1) \\ o(n+1) \end{bmatrix} =
\begin{bmatrix}
2+aK1 & -1+aK2 & b+aK3 & c+aK4 & aK5 & d \\
1 & 0 & 0 & 0 & 0 & 0 \\
K1 & K2 & K3 & K4 & K5 & 0 \\
0 & 0 & 1 & 0 & 0 & 0 \\
1 & 0 & 0 & 0 & 1 & 0 \\
0 & 0 & 0 & 0 & 0 & 1
\end{bmatrix}
\begin{bmatrix} y(n) \\ y(n-1) \\ u(n-1) \\ u(n-2) \\ z(n) \\ o(n) \end{bmatrix}
$$

$$
=
\begin{bmatrix}
2+aK1 & -1+aK2 & b+aK3 & c+aK4 & aK5 & d \\
1 & 0 & 0 & 0 & 0 & 0 \\
K1 & K2 & K3 & K4 & K5 & 0 \\
0 & 0 & 1 & 0 & 0 & 0 \\
1 & 0 & 0 & 0 & 1 & 0 \\
0 & 0 & 0 & 0 & 0 & 1
\end{bmatrix}^{2}
\begin{bmatrix} y(n-1) \\ y(n-2) \\ u(n-2) \\ u(n-3) \\ z(n-1) \\ o(n-1) \end{bmatrix} = \ldots
$$

$$
=
\begin{bmatrix}
2+aK1 & -1+aK2 & b+aK3 & c+aK4 & aK5 & d \\
1 & 0 & 0 & 0 & 0 & 0 \\
K1 & K2 & K3 & K4 & K5 & 0 \\
0 & 0 & 1 & 0 & 0 & 0 \\
1 & 0 & 0 & 0 & 1 & 0 \\
0 & 0 & 0 & 0 & 0 & 1
\end{bmatrix}^{n-p+1}
\begin{bmatrix} y(p) \\ y(p-1) \\ u(p-1) \\ u(p-2) \\ z(p) \\ o(p) \end{bmatrix}
$$

$$
= E\alpha1^{n-p+1}V\alpha1 + F\alpha2^{n-p+1}V\alpha2 + G\alpha3^{n-p+1}V\alpha3 + H\alpha4^{n-p+1}V\alpha4
$$
$$
+ I\alpha5^{n-p+1}V\alpha5 + JV1
$$

Equation 18

$$
\begin{bmatrix} E \\ F \\ G \\ H \\ I \\ J \end{bmatrix} =
\begin{bmatrix} V\alpha1 & V\alpha2 & V\alpha3 & V\alpha4 & V\alpha5 & V1 \end{bmatrix}^{-1}
\begin{bmatrix} y(p) \\ y(p-1) \\ u(p-1) \\ u(p-2) \\ z(p) \\ o(p) \end{bmatrix}
$$

The values of E through J are determined from Equation 18. Assuming that an eigenvalue whose absolute value is a maximum at $\alpha5$, fast convergence is achieved for the same reason as described in the case of the settling mode if $z(p)$ is selected so as to be $I=O$. $z(p)$ is expressed as follows:

$$z(p) = H1y(p) + H2y(p-1) + H3u(p-1) + H4u(p-2) + H5o(p)$$

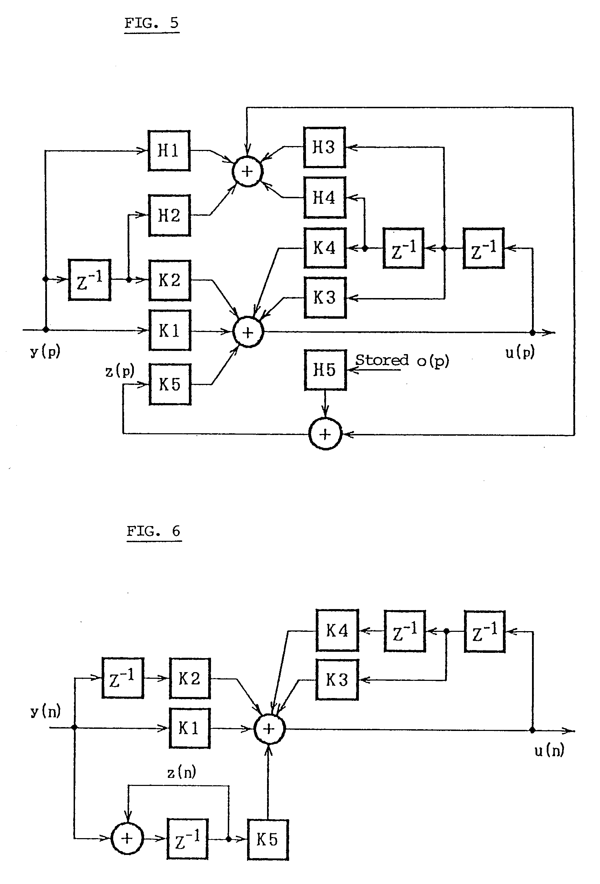

where, $o(p)$ is a value which is outputted to the DAC 28 when a stationary state is reached in the track following mode and, therefore, is available at time p if a value which was outputted when the stationary state was previously reached has been stored in the positioning apparatus 22. Thus if the above value of $z(p)$ is given as an initial value of the integrator at time p, positioning converges fast. FIG. 5 shows the configuration of the position control section 26 at time p when the settling mode is changed to the track following mode, and FIG. 6 shows the configuration at and after time p+1. In FIG. 5 and FIG. 6, the values of coefficients K1 to K4 are not necessarily the same as those in the settling mode.

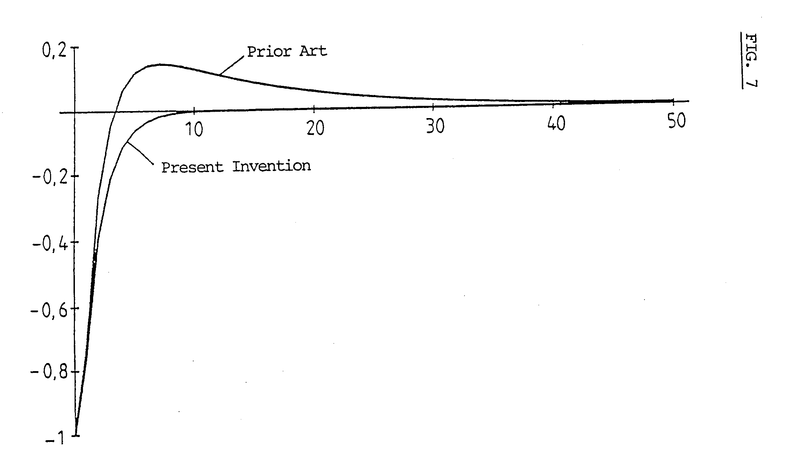

FIG. 7 shows the state of convergence in the track following mode according to the embodiment being described, in comparison with the prior art in which only a stationary value is added at the mode switching time. It is seen that the embodiment being described makes it possible to converge considerably faster than the prior art arrangement. FIG. 7 shows an example in which eigenvalues $\alpha i$ and coefficients Ki and Hi are chosen as follows:

$$\alpha 1=0.0 \qquad \alpha 2=-0.07+0.1i \qquad \alpha 3=-0.07-0.1i \qquad \alpha 4=0.54 \qquad \alpha 5=0.918$$

$$K1=-0.90 \qquad K2=0.64 \qquad K3=-1.20 \qquad K4=-0.093 \qquad K5=-0.017$$

$$H1=-4.22 \qquad H2=1.36 \qquad H3=-2.40 \qquad H4=-0.20 \qquad H5=127.8$$

A preferred embodiment of the present invention has been described above, but the present invention is not limited to them and it is possible to make various modifications. For example, it will be appreciated that the present invention may be applied not only to a magnetic disc device, but also to other recording devices such as a magneto-optical disc device. Further, the various numeric values used in the embodiments are also merely examples and may be varied depending on a design. It will be appreciated also that the position control section described with reference to FIG. 2, FIG. 3, FIG. 5, and FIG. 6 may be implemented by hardware circuits corresponding to the respective modes, but it is preferred to implement by a microprocessor because of flexibility in setting the coefficients. In that case, the velocity control section may also be realised by the same microprocessor.

## Claims

1. An actuator device comprising
   a fixed member (10),
   an actuator (12) cooperating with said fixed member,
   means (32) for moving said actuator relative to said fixed member and for positioning said actuator in a required position relative to said fixed member,
   a control system (22, 28, 30) for said actuator moving means for controlling the movement of said actuator in a selected one of a plurality of control modes and for switching between control modes,
   means (14, 16, 18, 20) for supplying an input signal to said control system representing the difference between the actual position of said actuator relative to said fixed member and the required position of said actuator, and
   means in said control system for generating a control signal in response to the receipt of said input signal and for supplying said control signal to said actuator moving means,
   characterised in that
   said input signal and said control signal are state variables and said control system comprises means for varying the gain of said control system only when switching between control modes.

2. An actuator device as claimed in Claim 1 characterised in that said control system comprises means for adding an initial value to said control signal to vary said gain only when said control mode switching takes place, said initial value generating to nullify a term of an eigenvalue having a maximum absolute value in the state equation of said control system.

3. An actuator device as claimed in Claim 2 characterised in that said control system comprises first generating means for generating an initial value to move said actuator towards said required position at a relatively fast speed in response to said input signal and said control signal values, and second adding means for adding said initial value to said control signal value when said mode switching takes place.

4. An actuator as claimed in Claim 4 characterised in that said control system comprises means for sampling said input signal and said control signal at predetermined intervals and in that said first generating means comprises first multiplication means for receiving said input signal value at a mode switching time, second multiplication means for receiving said input signal value of one sample before said mode switching time, third multiplication means for receiving said control signal value at one sample before said mode switching time, fourth multiplication means for receiving said control signal value at two samples before said mode switching time, and addition means for generating said initial value by adding outputs from said first through fourth multiplication means.

5. An actuator as claimed in Claim 4 characterised in that said second adding means adds said initial value at a switching time from a velocity control mode to a position control mode.

6. An actuator as claimed in Claim 5 characterised in that said position control mode comprises a settling mode which is switched into from said velocity control mode when said difference reaches a predetermined value, and a track following mode which is switched into from said settling mode when said difference reaches a second predetermined value.

7. An actuator as claimed in Claim 6 characterised in that said control system comprises an integrator for integrating said input signal value, and for supplying said initial value when said settling mode is changed to said track following mode.

FIG. 1

FIG. 2

FIG. 3

FIG. 4

FIG. 5

FIG. 6

FIG. 7

European Patent
Office

**EUROPEAN SEARCH REPORT**

Application Number

EP    92 30 9336

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X<br>A | EP-A-0 378 327 (FUJITSU)<br>* column 4, line 33 - column 17, line 27; figures 1-21 * | 1-3<br>4-7 | G11B21/08 |
| X | PATENT ABSTRACTS OF JAPAN<br>vol. 13, no. 382 (P-923)24 August 1989<br>& JP-A-11 33 272 ( MITSUBISHI ) 25 May 1989<br>* abstract * | 1-3 | |
| X | PATENT ABSTRACTS OF JAPAN<br>vol. 13, no. 329 (P-904)25 July 1989<br>& JP-A-10 92 973 ( MITSUBISHI ) 12 April 1989<br>* abstract * | 1-3 | |
| X | PATENT ABSTRACTS OF JAPAN<br>vol. 12, no. 341 (P-758)13 September 1988<br>& JP-A-63 100 678 ( MITSUBISHI ) 2 May 1988<br>* abstract * | 1-3 | |
| X | PATENT ABSTRACTS OF JAPAN<br>vol. 15, no. 214 (P-1209)31 May 1991<br>& JP-A-30 58 357 ( HITACHI ) 13 March 1991<br>* abstract * | 1-3 | TECHNICAL FIELDS SEARCHED (Int. Cl.5 )<br><br>G11B |

The present search report has been drawn up for all claims

| Place of search | Date of completion of the search | Examiner |
|---|---|---|
| THE HAGUE | 21 JANUARY 1993 | GEOGHEGAN C.H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)